# EUROPEAN PATENT APPLICATION

(11) **EP 2 314 406 A1**
(43) Date of publication of application: **27.04.2011**
(21) Application number: 10745917.4
(22) Date of filing: 16.02.2010
(51) Int. Cl.: B23K 9/12, B23K 9/127, B23K 9/173, B25J 9/16

(54) **WELDING METHOD AND WELDING SYSTEM**

(30) Priority: 25.02.2009 JP 2009041952
(71) Applicant: Panasonic Corporation, Kadoma-shi Osaka 571-8501 (JP)
(72) Inventor: MASAI, Toshiaki, Osaka-shi, Osaka 540-6207 (JP); YOSHIMA, Kazumasa, Osaka-shi, Osaka 540-6207 (JP)
(74) Representative: Kügele, Bernhard
(86) International application number: PCT/JP2010/000927
(87) International publication number: WO 2010/098030

(57) **Abstract**

The movement of a single electrode (18a) by a welding robot system (a) is followed by the movement of a single electrode (18b) by another welding robot system (b). By constructing the single electrode (18a) of one welding robot system (a) and the single electrode (18b) of the another welding robot system (b) to perform welding simultaneously in the same direction on the same welding line, the degrees of freedom of the robots are not restricted, the available welding range becomes wide, and constraints on the posture of the robots are eliminated, compared with a case where a tandem welding-dedicated torch is used.

## Description

### TECHNICAL FIELD

The present invention relates to a welding method and a welding system which uses a plurality of welding robot systems, and performs simultaneous welding on one welding line using welding electrodes mounted on the welding robot systems.

### BACKGROUND ART

Conventionally, in a welding method at production sites, welding robots have been introduced to advance automation and labor saving. Moreover, in recent years, so-called high-deposition welding with a large amount of a consumable welding electrode (that is, a welding wire) which melts and transfers to a base material tends to be performed in order to achieve high efficiency in the welding method. "Tandem welding" of aligning two electrodes on a welding line and performing one-pool two-arc welding is often adopted, as a welding method for performing high-deposition welding while maintaining high welding quality.

A two-electrode integrated torch, or two single-electrode torches which are fixedly arranged in proximity to each other are generically referred to as a "tandem welding-dedicated torch" for convenience of the following description. Tandem welding is applied to a welding process for actual production by a welding system which has a tandem welding-dedicated torch mounted on a welding robot, and is constituted by required apparatuses (for example, refer to PTL 1).

As for the conventional tandem welding-dedicated torch used for tandem welding, the relative positions of two electrodes are fixed. In the case of a welding system which has the tandem welding-dedicated torch mounted on a welding robot, and performs welding, since two electrodes are aligned along a welding line in order to perform tandem welding, one degree of freedom of the robot is restricted. That is, the degree of freedom of operation as the robot is lowered. As a result, there are problems in that constraints are caused in the posture of the robot in a welding part, and the available welding range becomes narrow. This is a problem which is not with the welding robot mounting a single electrode torch.

Additionally, in the robot mounting the tandem welding-dedicated torch, a situation in which the dimensions around the torch become large cannot be avoided, and if an obstruction exists near a welding object, the torch will hit the obstruction. Therefore, there is a problem in that welding cannot be performed on such a welding object. This problem is also a problem which becomes more noticeable than a conventional welding robot mounting a single electrode torch. These problems occur because the tandem arc welding method is used aiming at high efficiency, and the tandem welding-dedicated torch is mounted, in spite of a section (spot) which has been welded without problems in the welding robot mounting a single electrode torch. Therefore, a situation occurs in which an area of a weldable section decreases.

The original purpose when a welding robot is introduced is to realize labor saving and or automation. However, if a portion which cannot be welded remains, the portion should be welded by hand. The ratio of parts which can be automated will decrease, the ratio depending on manpower will increase, and a situation contrary to the original purpose will occur.

Moreover, in the tandem welding-dedicated torch, the positional relationship of two electrodes during welding is fixed. Therefore, the positions of each electrode will be determined relative to a welding line of a welded joint which is a welding object. Therefore, a range where the position of each electrode can be adjusted is narrow. In addition, since the two electrodes can only be manipulated (moved) similarly, there are constraints on properly performing welding required for a joint which is a welding object.

That is, if the angle or wire extention of one electrode to a welded joint is changed, the angle or were extention of the other electrode will be changed with the above change, and each electrode cannot be properly adjusted individually.

Additionally, if weaving of the one electrode is performed, the other electrode also cannot help but perform the same weaving. Moreover, it cannot be said that only one of the two electrodes performs weaving and the other electrode does not perform weaving. This becomes a constraint when proper welding conditions of a target welded joint are determined, and has resulted in fostering tandem welding difficulty.

The same problem as this exists even in an arc sensor. Performing welding position correction by an arc sensor function using the welding current and welding voltage of two electrodes is possible even at present. However, since the two electrodes are mounted on one welding robot in the case of the tandem welding-dedicated torch, position correction of the two electrodes cannot be separately performed.

In addition, although the positional relationship of the two electrodes is fixed in the tandem welding-dedicated torch, a situation in which slight deformation is caused with use cannot be avoided. In that case, simply correcting the positions of both the electrodes similarly will shift a welding target position.

### CITATION LIST

### [Patent Literature]

[PTL 1] Japanese Patent No. 4089755

### DISCLOSURE OF THE INVENTION

The present invention is to provide a welding method and a welding system in which the degrees of freedom of a plurality of robots are not restricted and the available welding range is not narrowed.

The welding method of the present invention is a welding method which performs welding using a plurality of welding robots which performs welding using a single electrode. Here, the movement of the single electrode by one welding robot is followed by the movement of the single electrodes by the other welding robots, and the single electrode of the one welding robot and the single electrodes of the other welding robot systems perform welding simultaneously in the same direction on a same welding line.

Additionally, the welding system of the present invention is a welding system including: a plurality of welding robot systems each including a manipulator holding a welding torch for a single electrode; a control device which controls the operation of the manipulator on the basis of an operation program which is stored in advance, and a welding power-supply unit which supplies electric power between a welding wire which is a single electrode, and a welding object, wherein the movement of the single electrode by the manipulator of one welding robot system is followed by the movement of the single electrodes by the manipulators of the other welding robot systems, and the single electrode of the one manipulator and the single electrodes of the other manipulators perform welding simultaneously in the same direction on a same welding line.

According to this configuration, the position and posture of single electrodes of a plurality of robots may be determined in respective optimal postures of the robots, the degrees of freedom of the robots are not restricted compared to the case where the tandem welding-dedicated torch is used, and the available welding range is not narrowed. For this reason, constraints on the posture of the robots are eliminated.

### BRIEF DESCRIPTION OF THE DRAWINGS

Fig. 1 is a view showing the schematic configuration of a welding system in Embodiment 1 of the present invention.
Fig. 2 is a view showing the operation of consumable welding electrodes in Embodiment 1 of the present invention.
Fig. 3 is a view showing an example of a program in Embodiment 1 of the present invention.
Fig. 4 is a view showing the flow of interpolation processing in Embodiment 1 of the present invention.
Fig. 5 is a view showing another operation of consumable welding electrodes in Embodiment 1 of the present invention.
Fig. 6 is a view showing another example of the program in Embodiment 1 of the present invention.
Fig. 7 is a view showing a specific example of welding in Embodiment 1 of the present invention.
Fig. 8A is a view showing the flow of weaving processing in Embodiment 2 of the present invention.
Fig. 8B is a view showing the flow of the weaving processing in Embodiment 2 of the present invention.
Fig. 9 is a view showing a specific example of welding in Embodiment 2 of the present invention.
Fig. 10 is a view showing another specific example of the welding in Embodiment 2 of the present invention.
Fig. 11A is a view showing the flow of arc sensor processing in Embodiment 3 of the present invention.
Fig. 11B is a view showing the flow of the arc sensor processing in Embodiment 3 of the present invention.

### EMBODIMENTS

Hereinafter, the present invention will be described by way of embodiments with reference to the drawings. However, the present invention is not limited to the embodiments.

### (Embodiment 1)

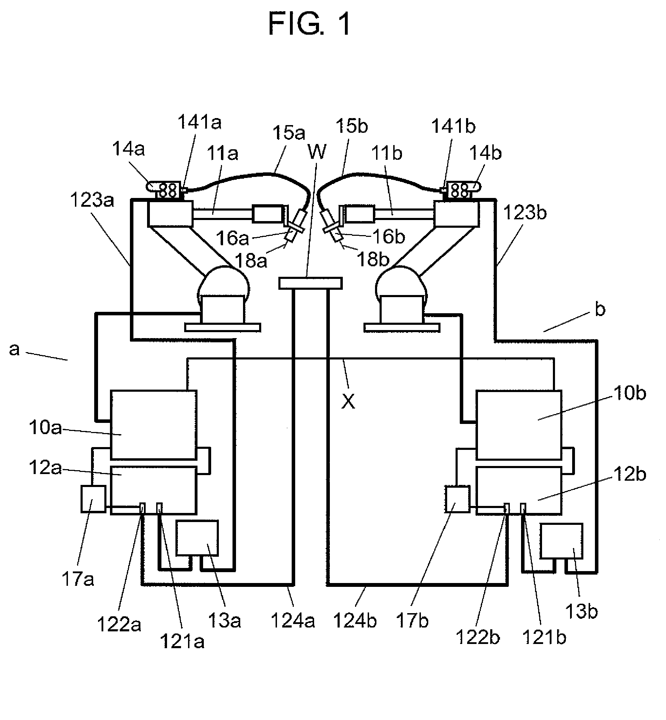

Fig. 1 is a view showing the schematic configuration of a welding system in the present embodiment. Fig. 1 shows an example in which the welding system is constituted by two welding robot systems with a configuration through the same apparatus. In addition, the method of connecting the welding robot systems mutually may vary depending on the specifications of apparatuses to be constituted, and the configuration of Fig. 1 is a thorough example.

Additionally, although an example in which the welding system is constituted by two welding robot systems is shown in Fig. 1 for convenience of description, the welding system is not necessarily limited to two welding robot systems, and it is also possible to constitute the welding system by three or more welding robot systems.

In addition, a practical welding system often has as constituent elements a shifter which mounts a manipulator and moves the position of the manipulator, a positioner which mounts a base material which is a welding object, and changes the posture of the base material, a jig for mounting the base material, and the like. However, these constituent elements are not elements required for the description of the present embodiment, and the description thereof is omitted herein for simplification of description.

Additionally, in Fig. 1, one welding robot system shall be referred to as a for convenience of description, and the suffix a shall be given to reference signs of respective parts of welding robot system "a". Additionally, the other welding robot system shall be referred to as b for convenience of description, and the suffix b shall be given to reference signs of respective parts of welding robot system "b" . The two welding robot systems will be described while being distinguished in this way.

First, the configuration of welding robot system "a" will be described. Welding robot system "a" includes manipulator 11a and welding power-supply unit 12a. Cable 123a is connected to torch terminal 121a provided at welding power-supply unit 12a. Base material W is connected to base-material terminal. 122a provided at welding power-supply unit 12a. Wire feeder 14a is attached to manipulator 11a. The operation of manipulator 11a is controlled by control device 10a. Cable 123a is connected to electric supply terminal 141a provided at wire feeder 14a via touch sensor unit 13a, when this touch sensor unit is used. Cable 123a is directly connected to electric supply terminal 141a when the touch sensor unit 13a is not used.

Wire feeder 14a and single electrode welding torch 16a are connected together by torch cable 15a. Consumable welding electrode 18a which is a welding wire passes through torch cable 15a. Cable 124a has one end connected to base material W which is a welding object and has the other end connected to base-material terminal 122a provided at welding power-supply unit 12a.

When welding is performed, electric power is supplied between consumable welding electrode 18a and base material W by welding power-supply unit 12a, thereby generating an arc. As the arc is generated, a circuit for a welding current which leads to base-material terminal 122a via consumable welding electrode 18a and base material W from torch terminal 121a is formed. A welding current flows to this circuit for a welding current.

Additionally, consumable welding electrode 18a is continuously fed to base material W by controlling wire feeder 14a by welding power-supply unit 12a. Then, as the operation of manipulator 11a is controlled by control device 10a, consumable welding electrode 18a moves along a welding line of base material W. Arc welding is performed by this.

Control device 10a controls the operation of manipulator 11a on the basis of an operation program stored in advance in a memory which is not shown. Moreover, control device 10a gives an instruction for a welding current, welding voltage, or the like to welding power-supply unit 12a. Welding power-supply unit 12a controls a welding current or welding voltage according to the instruction.

Arc sensor 17a adds predetermined processing to measurement data of the welding current/welding voltage measured in any part of the inside of welding power-supply unit 12a and the above circuit for a welding current, according to the request of control device 10a, converts the measurement data into the data equivalent to the deviation from a welding line, and sends the converted data to control device 10a. Control device 10a controls the operation of manipulator 11a on the basis of the data equivalent to the deviation from a welding line which has been received, and corrects the deviation from a welding line. In addition, although arc sensor 17a is not necessarily used, the arc sensor is used in the present embodiment.

In addition, welding robot system "b" performs welding on base material W common to welding robot system "a" and has the same configuration as welding robot system "a". Accordingly, the description of respective apparatuses which constitute welding robot system "b" is omitted.

Additionally, in Fig. 1, control device 10a and control device 10b are connected together by communication cable X between robots.

In the present embodiment, similarly to conventional tandem arc welding, in order to arrange two consumable welding electrodes 18a and 18b on a welding line so as to be aligned in proximity to each other in the direction of progression of welding, both consumable welding electrodes 18a and 18b are made to generate arcs while moving in the direction of progression of welding in a state where one electrode leads and the other electrode trails, with respect to the direction of progression of welding. That is, in the configuration of Fig. 1, the movement of consumable welding electrode 18a within single electrode welding torch 16a by the manipulator 11a of one welding robot system "a" is followed by the movement of consumable welding electrode 18a within single electrode welding torch 16b by the manipulator 11b of the other welding robot system "b" . Welding is performed while forming one melting pool by two arcs including an arc generated between consumable welding electrode 18a and base material W and an arc generated between consumable welding electrode 18b and base material W. Thereby, welding similar to conventional tandem welding can be performed.

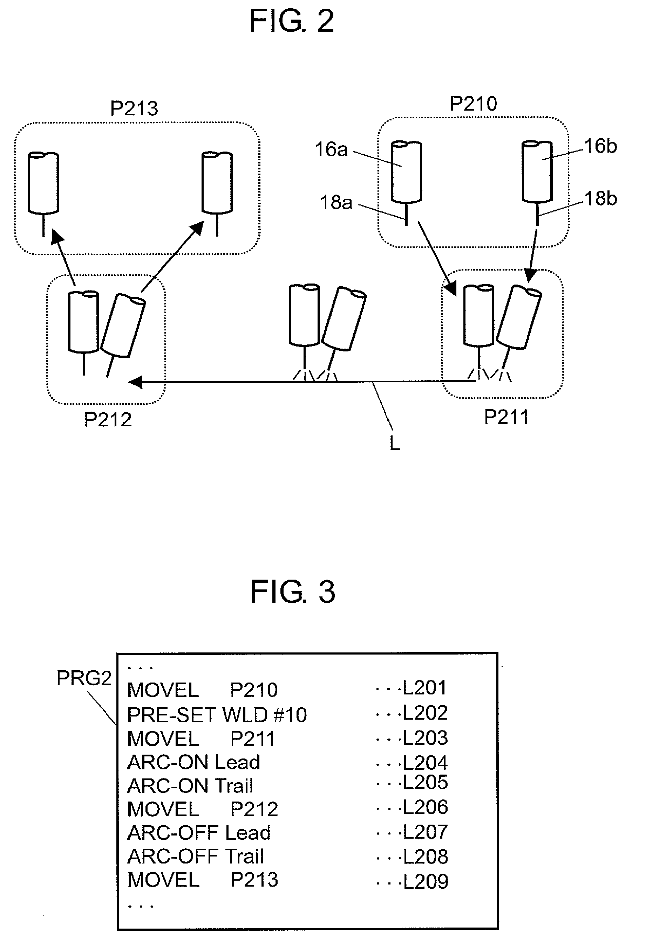

Next, the operation of the welding system shown in Fig. 1 will be described with reference to Fig. 2. Fig. 2 is a view showing the operation of the consumable welding electrodes in the present embodiment. In addition, in Fig. 2, a case where welding robot system "a" shown in Fig. 1 leads with respect to the direction of progression of welding, and welding robot system "b" trails with respect to the direction of progression of welding will be described.

In Fig. 2, P210, P211, P212, and P213 show programmed time-series positions of consumable welding electrode 18a and consumable welding electrode 18b before and after welding of a welding line when welding of one welding line is performed.

In Fig. 2, if an execution start signal of a program is input to control device 10a and control device 10b of Fig. 1, manipulator 11a and manipulator 11b start operation, and consumable welding electrode 18a and consumable welding electrode 18b soon arrive at positions shown in P210. This position is a position before welding is performed, and consumable welding electrode 18a and consumable welding electrode 18b are at separate coordinate positions. The operation of manipulator 11a and manipulator 11b continues, and as shown in P211, consumable welding electrode 18a and consumable welding electrode 18b arrive at the welding line L, and come close to each other with a certain gap. Thereafter, both of the welding robot systems start welding to generate arcs (P211 is a welding starting point position), and perform welding on the welding conditions specified thereto, respectively. Consumable welding electrode 18a and consumable welding electrode 18b move along the welding line L at a welding speed specified as a welding condition. If consumable welding electrode 18a and consumable welding electrode 18b arrive at a position P212, both of the welding robot systems end welding. Then, a retreat movement is made from welding line L, and as shown in P213, consumable welding electrode 18a and consumable welding electrode 18b move to separate distant positions in the air.

An example of an operation program for performing such an operation is shown as PRG2 in Fig. 3. In addition, this program is stored in, for example, control device 10a or control device 10b.

In Fig. 3, command L201 instructs consumable welding electrode 18a and consumable welding electrode 18b to move to positions shown in P210. Command L202 specifies the welding conditions to be used when welding is performed. Command L203 instructs consumable welding electrode 18a and consumable welding electrode 18b to move to positions shown in P211. Command L204 instructs consumable welding electrode 18a which is a leading electrode to start welding. Command L205 instructs consumable welding electrode 18b which is a trailing electrode to start welding. Command L206 instructs two electrodes, i.e., the consumable welding electrodes 18a and 18b, to move to positions shown in P212. Command L207 instructs consumable welding electrode 18a which is a leading electrode to end welding. Command L208 specifies that consumable welding electrode 18b which is a trailing electrode end welding. Command L209 instructs two electrodes including consumable welding electrode 18a and consumable welding electrode 18b to move to positions shown in P213.

Here, P210, P211, P212, and P213 represent instruction points programmed as the operation of the welding robots. Each instruction point includes the data required in order to specify the respective position of two electrodes, consumable welding electrode 18a and consumable welding electrode 18b. In addition, as the data required in order to specify the positions of the electrodes, there is data expressed by combinations of coordinate values (X, Y, Z) and Eulerian angles (φ θ, ϕ) of the consumable welding electrodes in the rectangular coordinate system (referred to as a robot coordinate system) in which the attachment position of a manipulator is placed on the center, or a set of position data of respective shafts which constitutes a manipulator. In addition to this, when there are a shift axis and a positioner axis, the position data thereof is included. However, any kind of expression types may be used in the present embodiment.

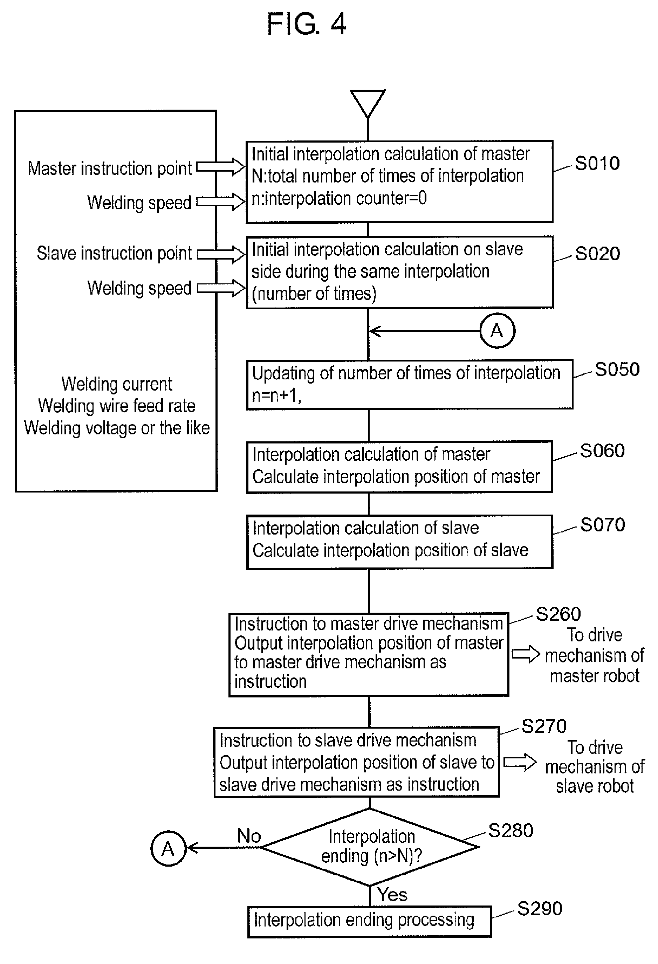

Next, interpolation processing of one unit for movement from one instruction point to the next instruction point will be described with reference to a flow chart shown in Fig. 4. For example, the above interpolation processing is a case of interpolation processing, a starting position of interpolation is the position P211 shown in Fig. 2, and an end position is P212 shown in Fig. 2. In addition, as described earlier, P211 is a welding starting point position, and P212 is a welding end point position.

The processing performed according to the flow chart shown in Fig. 4 is the processing performed in one control device, one welding robot system is referred to as a master, and the other welding robot system is referred to as a slave. In order to perform processing in the master, parameters, such as programs and welding conditions, are stored in a memory (not shown) of a control device of the master. Although the difference between the master and the slave is a difference mainly in the roles of performing control and following the control, any welding robot systems can be both master and slave providing the roles are determined in advance. Also, an essential difference is unnecessary on the specifications of the apparatuses. In the present embodiment, description will be made with welding robot system "a" as the master and welding robot system "b" as the slave. Moreover, even if the master leads or trails in welding control, both are sufficient provided the fact is settled. Although this can be set by a command in the program, the master leads as a default in case there is no setting. Here, description will be made supposing that the leading welding robot system is the master, i.e., welding robot system "a".

As the processing of the flow chart shown in Fig. 4, the processing from S010 to S290 is shown. During processing, as shown on the left of Fig. 4, parameters, such as programs and welding conditions, are read from a memory which is not shown, and processing is advanced to perform operation instructions to drive systems of two welding robot systems shown on the right of Fig. 4 by S260 and S270. The welding conditions read from the memory are a master instruction point, a slave instruction point, a welding current, a welding voltage, a welding wire feed rate, and the like. The operation instructions to the drive systems of the welding robot systems are output to a drive mechanism of a master robot and a drive mechanism of a slave robot.

In Fig. 4, first, initial calculation required for interpolation operation of the master is performed using the instruction point of the master registered in the program, and a welding speed specified as a welding condition (S010). During this calculation, the total number N of times of interpolation is calculated. Additionally, interpolation counter n which counts the number of times of subsequent interpolation position calculation is set to zero.

Next, the initial calculation required for the interpolation operation of the slave is performed using the instruction point, welding speed, and the like of the slave which are registered in the program (S020). The total number N of times of interpolation is performed as a given value. Thereby, the interpolation operation of master and slave is performed during the total number of times of interpolation, i.e., at the same time.

Next, an interpolation position is calculated from S050 to S070. First, after the number of times of interpolation is incremented (S050), the interpolation position of the master is calculated using the updated number of times of interpolation and the result of the initial interpolation calculation which has been obtained previously (S060). Thereafter, the interpolation position of the slave is calculated similarly (S070).

Next, the interpolation position of the master calculated in S060 is output to the drive mechanism of the master robot as a drive instruction (S260). Next, the interpolation position of the slave calculated in S070 is output to the drive mechanism of the slave as a drive instruction (S270).

Since the series of processing is performed in welding robot system "a" which is a master, an instruction to the drive mechanism of welding robot system "b" which is a slave is sent from the master via the communication cable X between robots. The slave receives the instruction, and its drive system is operated according to the instruction.

Next, it is determined whether or not interpolation counter n is greater than the total number N of times of interpolation (S280). If the interpolation counter n is not greater than the total number N of times of interpolation, i.e., if interpolation counter n is less than the total number N of times of interpolation (No at S280), the processing returns to S050 from which the interpolation calculation is repeated. This realizes the operation which goes to the end point position (P212) of the welding sequentially from the starting point position (P221) of the welding.

If interpolation counter n is the total number N of times of interpolation in S280 (Yes at S280), the processing when arriving at the end point position is performed, and the interpolation operation as one unit is ended (S290).

In actual operation, welding control is performed before, after and during the interpolation operation of this one unit. As the welding control, an instruction of a start/end of welding, or as shown on the left of Fig. 4, a command of a welding Current/welding voltage, an instruction of a welding wire feed rate, and the like are sent to the welding power-supply unit according to the setting contents of the welding conditions specified by a command in the program.

As described above, since all parameters, such as programs and welding conditions, are in the memory of control device 10a of welding robot system "a" which is a master, an instruction to welding power-supply unit 12b of welding robot system "b" which is a slave is sent to the slave (welding robot system "b") from the master (welding robot system "a") via communication cable X between robots. The slave receives the instruction, and welding power-supply unit 12b is instructed according to the instruction.

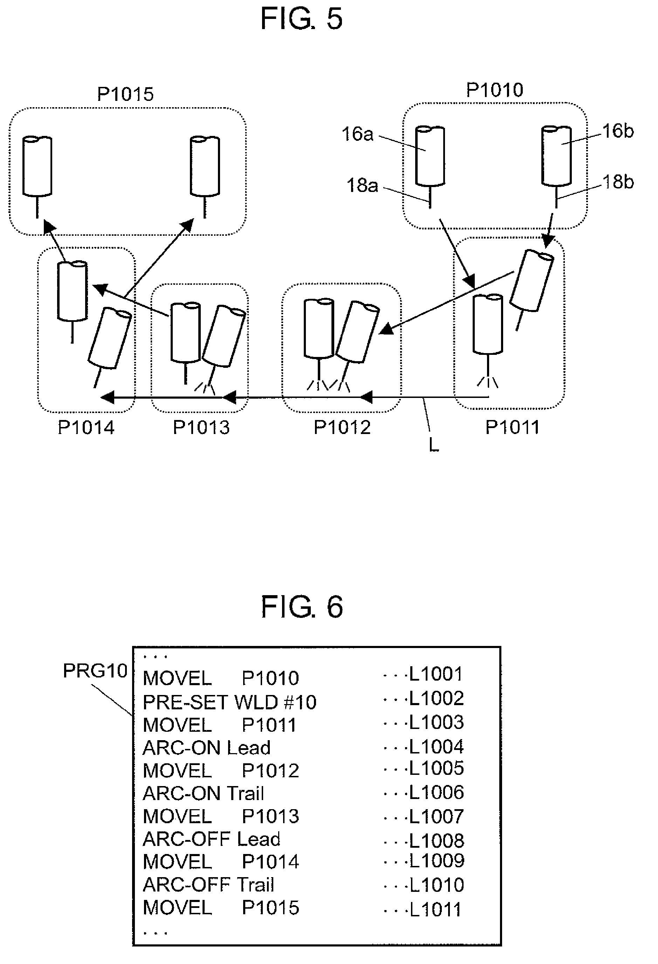

Another example of the operation in the present embodiment is shown in Fig. 5, and an example of a program of operation is shown in Fig. 6. A main point different from the case of Figs. 2 and. 3 is that simultaneous welding by both the electrodes, and welding only by one electrode can be switched.

In Fig. 5, P1010, P1011, P1012, P1013, P1014, and P1015 show programmed time-series positions on one welding line L and consumable welding electrode 18a and consumable welding electrode 18b before and after the welding.

In Fig. 5, if an execution start signal of a program is input to control device 10a and control device 10b, and manipulator 11a and manipulator 11b start operation, consumable welding electrode 18a and consumable welding electrode 18b soon arrive at positions shown in P1010. As such, before welding is performed, consumable welding electrode 18a and consumable welding electrode 18b are at separate positions as shown in P1010.

Thereafter, the operation is continued, as shown in P1011, consumable welding electrode 18a arrives at welding line L, and consumable welding electrode 18b arrives at the air near welding line L. Here, only consumable welding electrode 18a starts welding to generate an arc. Then, welding is advanced only in consumable welding electrode 18a, and consumable welding electrode 18a and consumable welding electrode 18b come close to welding line L in P1012. Here, consumable welding electrode 18b also starts welding to generate an arc.

Although welding is advanced in both the electrodes, only consumable welding electrode 18a soon ends welding when the electrodes arrive at P1013. Thereafter, while only consumable welding electrode 18b performs welding and moves along the welding line, consumable welding electrode 18a retreats into the air. This is a position P1014. Here, consumable welding electrode 18b also ends welding.

Thereafter, as in P1015, consumable welding electrode 18a and consumable welding electrode 18b move to separate distant positions in the air.

An example of an operation program for performing such operation is shown as PRG10 in Fig. 6. In addition, this program is stored in, for example, control device 10a.

In Fig. 6, command L1001 instructs consumable welding electrode 18a and consumable welding electrode 18b to move to positions shown by P1010, respectively. Command L1002 specifies the welding conditions to be used when welding is performed. Command L1003 instructs consumable welding electrode 18a and consumable welding electrode 18b to move to positions shown in P1011. Command L1004 instructs consumable welding electrode 18a which is a leading electrode to start welding. Command L1005 instructs consumable welding electrode 18a and consumable welding electrode 18b to move to positions shown in P1012. Command L1006 instructs consumable welding electrode 18b which is a trailing electrode to start welding. Command L1007 instructs two electrodes, i.e., the two consumable welding electrodes 18a and 18b, to move to positions shown in P1013. Command L1008 instructs consumable welding electrode 18a which is a leading electrode to end welding. Command L1009 instructs two electrodes including consumable welding electrode 18a and consumable welding electrode 18b to move to positions shown in P1014. Command L1010 instructs consumable welding electrode 18b which is a trailing electrode to end welding. Command L1011 instructs two electrodes including consumable welding electrode 18a and consumable welding electrode 18b to move to positions shown in P1015. As described above, as can also be seen from Fig. 5, the coordinates of the positions of two electrodes, i.e., consumable welding electrode 18a and consumable welding electrode 18b, differ, respectively.

Even when welding is performed as shown in Figs. 5 and 6, similarly to the case which has been described with reference to Figs. 2 and 3, the flow chart shown in Fig. 4 is executed as an interpolation operation of one unit before, after, and during an operation of one unit. The welding control before, after, and during an operation of one unit is realized by sending, for example to welding power-supply unit 12a an instruction of a start/end of welding or an instruction of a welding current/welding voltage according to the setting contents of the welding conditions specified by a command in the program.

As described above, by operating the slave in accordance with the operation of the master, two consumable welding electrodes 18a and 18b of two welding robot systems a and b can be arranged and operated at positions close to each other with a certain gap. Thereby, similarly to the conventional tandem arc welding method, one-pool two-arc welding can be performed using two welding robot systems a and b.

Additionally, since the positional relationship of two consumable welding electrodes is fixed in the conventional welding method using tandem torch or two torches, the electrodes can not be made to take separate postures, respectively. However, in the present embodiment, as described above each instruction point includes data (combinations of coordinate values (X, Y, Z) and Eulerian angles (φ, θ, ϕ) ) required in order to specify the positions of two consumable welding electrodes 18a and 18b. As a result, the electrodes can also be made to take optimal separate postures respectively. For this reason, the degrees of freedom of the robots are not restricted compared to the case where the tandem welding-dedicated torch is used, and the available welding range is not narrowed. Thereby, constraints on the posture of the robots are eliminated.

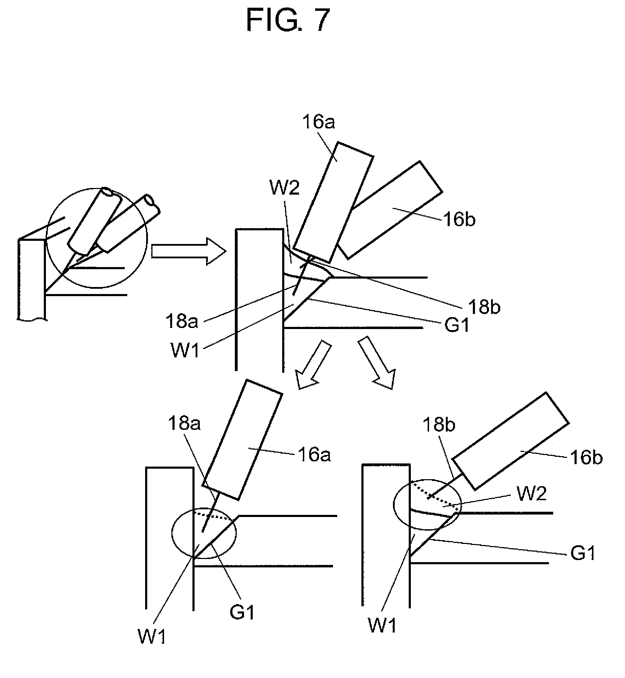

Using the present embodiment, for example, as shown in Fig. 7, respective single electrode welding torches 16a and 16b can be made to take separate postures in accordance with joints, and convenience of welding construction is improved.

Fig. 7 shows a case where a fillet welded joint with a single bevel groove is welded. It is assumed that it is necessary to heap a fillet welding bead with a fixed leg length on groove portion G1. In Fig. 7, leading consumable welding electrode 18a performs first welding W1 of groove portion G1, and trailing consumable welding electrode 18b performs second welding W2 of a fillet portion. At that time, a case where it is intended to obtain a substantially flat bead shape by enlarging inclination of trailing consumable welding electrode 18b with respect to consumable welding electrode 18a is shown.

Additionally, since welding is performed on a narrow portion or the like where it is difficult to perform welding with a plurality of electrodes, using one of two welding robot systems a and b, it is not necessary to reduce the rate of automation as a whole.

Additionally, as the welding method and welding system in the present embodiment, there is used a standard welding robot system which performs welding with a single electrode without using special apparatuses, such as a torch for tandem welding and an attaching mechanism for two-torch welding. Since the welding system is constituted by the standard apparatus in this way, replacement parts or the like are easily and cheaply available, and maintenance performance is excellent.

Moreover, compared to the case where special apparatuses, such as a torch for tandem welding and an attaching mechanism for two-torch welding are used, the surroundings of the torch are compact. Accordingly, when the torch for tandem welding or the attaching mechanism for two-torch welding is used, since such an apparatus hits peripheral members of a welding spot, welding of a part whose welding has not been completed also becomes possible, and user--friendly high.

Usually, since two welding robot systems which perform welding with a single electrode can be made to perform tandem welding if needed, a welding system with high degrees of freedom can be constructed. Particularly, in a welding system in which a welding robot system is placed on a movable carriage and is made movable, welding or tandem welding by a single electrode can be realized depending on a welding object or a welding spot, which is very useful.

### (Embodiment 2)

In the present embodiment, the same parts as those of Embodiment 1 are designated using the same reference signs and names, and detailed description thereof is omitted. The main point of the present embodiment which is different from Embodiment 1 is that weaving operation is performed.

In PRG2 which is shown in Fig. 3 and which is an example of the program, command L202 specifies the welding conditions to be used during welding. As these welding conditions, a weaving operation is performed by specifying a welding speed, a welding current or welding voltage of a leading electrode and a trailing electrode, and a set of weaving parameters when a weaving operation is performed. Since the welding method and welding system of a present embodiment use two welding robot systems "a" and "b" as shown in Fig. 1, the weaving parameters as well as the welding current and welding voltage can be specified as separate values in the leading electrode and the trailing electrode.

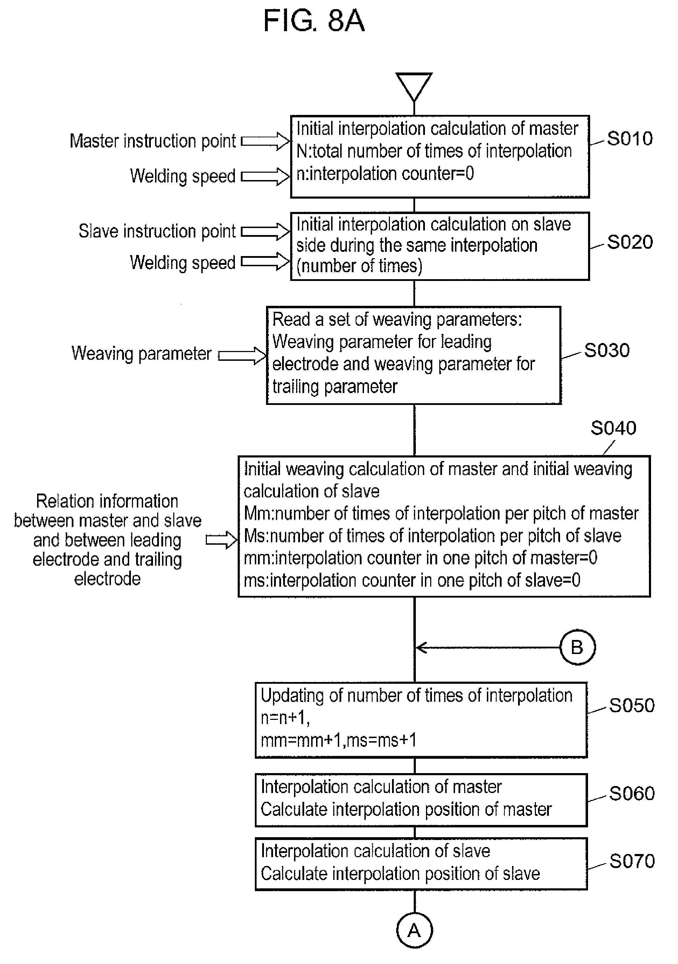

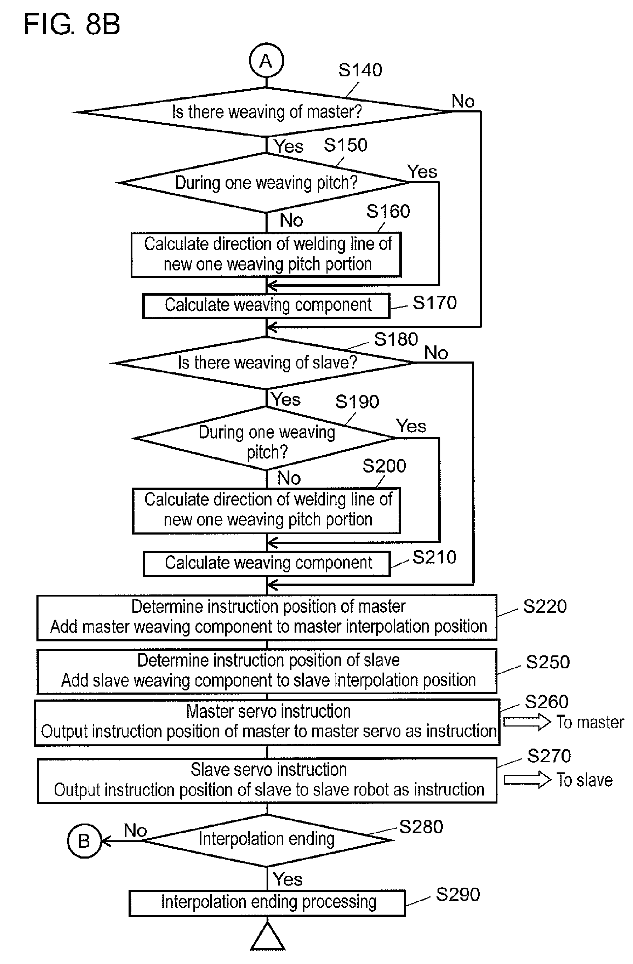

Flow charts when the weaving control is performed using weaving parameters which are different at the leading electrode and the trailing electrode are shown in Figs. 8A and 8B. As the processing, the processing from S010 to S290 is shown. During processing, as shown on the left of the flow chart of Fig. 8A, parameters, such as programs and welding conditions, are read from a memory which is not shown, and processing is advanced to perform operation instructions to drive systems of welding robot systems shown on the right of the flow chart of Fig. 8B.

In Figs. 8A and 8B, first, an initial calculation required for an interpolation operation of the master is performed using the instruction point of the master registered in the operation program, and a welding speed specified as a welding condition (S010). During this calculation, the total number N of times of interpolation is calculated. Additionally, an interpolation counter n which counts the number of times of subsequent interpolation position calculation is set to zero.

Next, an initial calculation required for an interpolation operation of the slave is performed using the instruction point, welding speed, and the like of the slave which are registered in the program (S020). The total number N of times of interpolation is performed as a given value. Thereby, the interpolation operation of the master and the slave is performed during the total number of times of interpolation, i.e., at the same time.

Next, one weaving parameter, i.e., a weaving parameter for the leading electrode and a weaving parameter for the trailing electrodes are read from the memories (not shown) of control devices 10a and 10b (S030).

Next, an initial weaving calculation of the master and an initial weaving calculation of the slave are performed using the information in which the relation between the leading and trailing electrodes and the relation between the master and the slave is set (S040) . If the above state is a default state, the weaving parameter of the leading electrode is assigned to the master, and the weaving parameter of the trailing electrode is assigned to the slave. The initial weaving calculation is processing which determines the numbers Mm and Ms of times of interpolation per pitch in the master and the slave, respectively, or a calculation formula of a weaving component for every interpolation. During this calculation, interpolation counters mm and ms in one pitch of the master and the slave are set to zero.

Next, an interpolation position is calculated from S050 to S070. First, after the number of times of interpolation is incremented (S050), the interpolation position of the master is calculated using the updated number of times of interpolation and the result of the initial interpolation calculation which has been obtained previously (S060). Moreover, the interpolation position of the slave is calculated similarly (S070).

Next, whether weaving of the master is performed or notis determined (S140). If there is no weaving of the master in S140 (No at S140), jumping to the weaving processing of the slave from S180 is made. If there is any weaving of the master in S140 (Yes at S140), it is determined whether the weaving is during one pitch (S150). If the weaving is during one pitch in S150 (Yes at S150), the processing jumps to S170, and a weaving component at every interpolation position is calculated in accordance with the direction of a welding line already obtained in S160. If the weaving is not during one pitch in S150 (No at S150), in order to move to a new weaving pitch, the direction of a welding line is re-calculated since the direction of the welding line is changed at every pitch of a circle arc or the like (S160). Thereafter, a weaving component at every interpolation position is calculated (S170).

Next, whether weaving of the slave is performed or not is determined (S180). If there is no weaving of the slave in S180 (No at S180), jumping to the determination processing of a specified position from S220 is made. If there is any weaving of the slave in S180 (Yes at S180), it is determined whether the weaving is during one pitch (S190). If the weaving is during one pitch in S190 (Yes at S190), the processing jumps to S210, and a weaving component at every interpolation position is calculated in accordance with the direction of a welding line already obtained in S200. If the weaving is not during one pitch in S190 (No at S190), in order to move to a new weaving pitch, the direction of a welding line is re-calculated since the direction of the welding line is changed at every pitch of a circle arc or the like (S200). Thereafter, a weaving component at every interpolation position is calculated (S210).

Next, the instruction position of the master is obtained by adding the weaving component at the interpolation position of the master to the interpolation position of the master (S220). Next, the instruction position of the slave is obtained by adding the weaving component at the interpolation position of the slave to the interpolation position of the slave (S250).

Next, a master servo instruction is performed by outputting the instruction position of the master to the drive mechanism of the master as an instruction (S260). Next, a slave servo instruction is performed by outputting the instruction position of the slave to the drive mechanism of the slave as an instruction (S270).

In addition, since the series of processing is performed in the master, an instruction to the drive mechanism of the slave is sent to the slave from the master via communication cable X between robots, and is received in the slave, and the drive system of the slave is operated according to the instruction.

Next, it is determined whether or not interpolation counter n is the total number N of times of interpolation (S280). If interpolation counter n is less than the total number N of times of interpolation in S280 (No at S280), the processing returns to S050 from which interpolation calculation is repeated. This realizes the operation which goes to an end point position sequentially from a starting point position. If interpolation counter n is the total number N of times of interpolation in S280 (Yes at S280), the processing when arriving at the end point position is performed, and the interpolation operation as one unit is ended (S290).

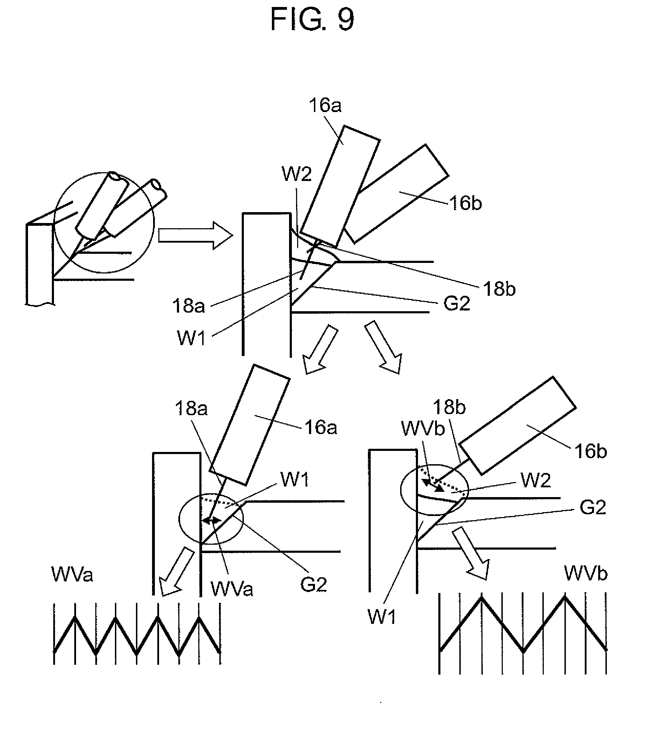

By performing the above processing, weaving which is different in the leading and trailing electrodes can be performed. This can realize, for example, the weaving welding construction adapted to the joint as shown in Fig. 9. Fig. 9 shows a case where a fillet welded joint with a single bevel groove is welded, and it is assumed that it is necessary to heap a fillet welding bead with a fixed leg length on groove portion G2. In Fig. 9, leading consumable welding electrode 18a performs first welding W1 of groove portion G2, and trailing consumable welding electrode 18b performs second welding W2 of a fillet portion. In that case, leading consumable welding electrode 18a which welds groove portion G2 performs weaving WVa with a small amplitude. Trailing consumable welding electrode 18b performs weaving WVb with a larger amplitude and inclination than leading consumable welding electrode 18a. Thereby, a substantially flat fillet bead is welded.

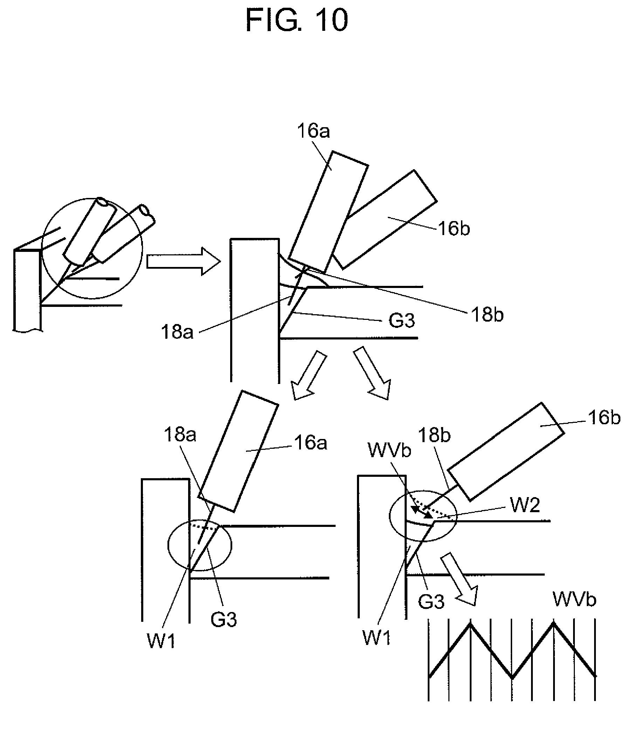

In addition, weaving may be performed in both the leading and trailing electrodes, and weaving may be performed in any one of the leading and trailing electrodes. Particularly, in the case of groove portion G3 where the width of a groove becomes still smaller as shown in Fig. 10, and it is not enough surplus to perform weaving, a selection can also be made such that the leading consumable welding electrode 16a does not perform weaving, but only the trailing consumable welding electrode 16b performs weaving WVb.

### (Embodiment 3)

In the present embodiment, the same parts as those of Embodiments 1 and 2 are designated using the same reference signs and names, and detailed description thereof is omitted. The main point of the present embodiment which is different from Embodiments 1 and 2 is in that an arc sensor function is used.

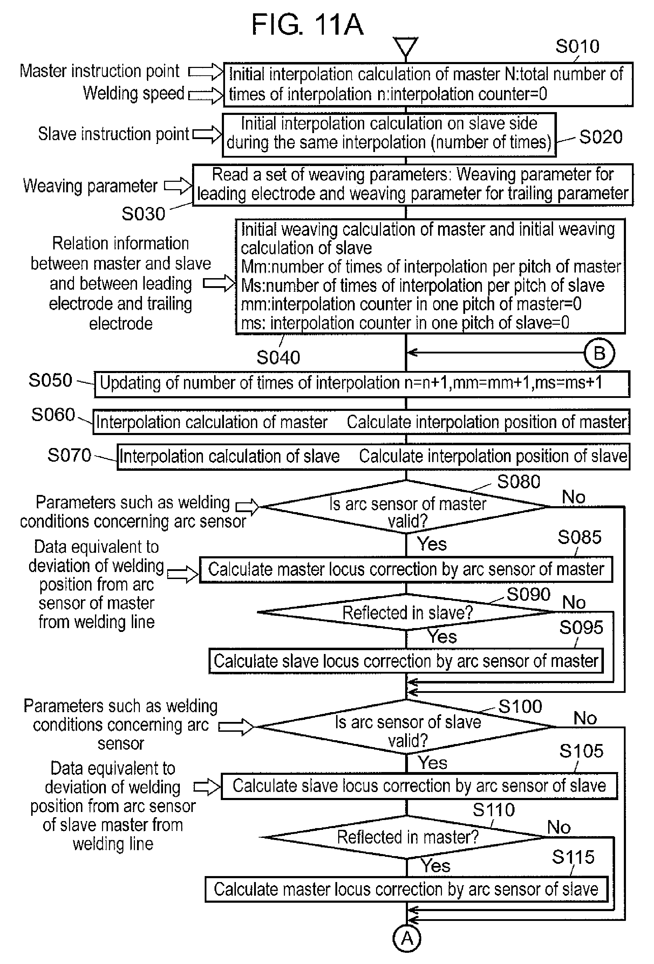

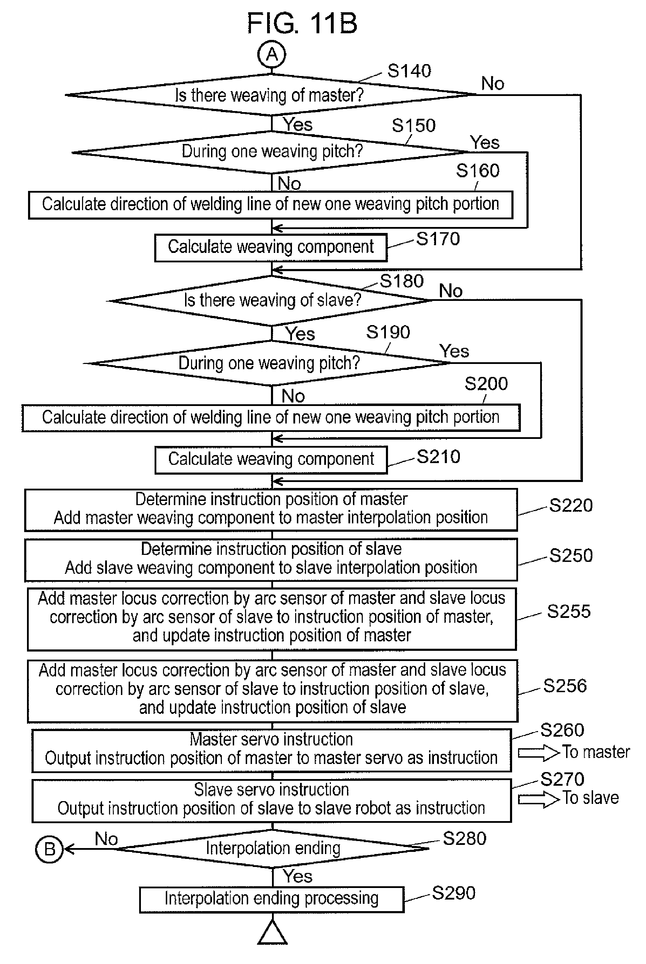

In the present embodiment, the data equivalent to the deviation from a welding line is sent to control devices 10a and 10b using arc sensors 17a and 17b shown in Fig. 1. Flow charts when the control of using an arc sensor function is used are shown in Figs. 11A and 11B.

In the present embodiment, as shown on the left of the flow chart of Fig. 11A, parameters, such as programs and welding conditions, are read from a memory which is not shown, and processing is advanced to perform instructions to drive systems of welding robot systems a and b shown on the right of the flow chart of Fig. 11B.

In Figs. 11A and 11B, since S010 to S070 are the same as those of Figs. 8A and 8B, description thereof is omitted. S080 to S115 is arc sensor processing. During this, parameters, such as welding conditions concerning the arc sensors, are read from a memory which is not shown, and processing is advanced. In the present embodiment, it is assumed that the master leads similarly to the case of Figs. 8A and 8B. Even in the present embodiment, welding robot system "a" is the master and welding robot system "b" is the slave.

First, parameters, such as welding conditions concerning the arc sensor of the master are read, and validity and invalidity of the arc sensor of the master is determined (S080). If the arc sensor of the master is invalid in S080 (No at S080), the processing jumps to the determination of the arc sensor of the slave of S100. If the arc sensor of the master is valid in S080 (Yes at S080), the data equivalent to the deviation from a welding line is read from the arc sensor of the master, and the processing of calculating correction of the position of the master is performed. That is, the master locus correction by the arc sensor of the master is calculated (S085) .

Next, it is determined whether or not the master locus correction by the arc sensor of the master is reflected in the slave, i.e., the arc sensor correction of the master is also used in the slave (S090). If the master locus correction by the arc sensor of the master is not reflected in the slave in S090, i.e., if the arc sensor correction of the master is not used in the slave (No at S090), jumping to the arc sensor determination of the slave of S100 is made. If the master locus correction by the arc sensor of the master is reflected in the slave in S090, i.e. , if the arc sensor correction of the master is also used in the slave (Yes at S090), correction of the position of the slave is calculated using the above read data equivalent to the deviation of the welding position of the master from the welding line, or using the correction of the master position calculated in S085. That is, the slave locus correction by the arc sensor of the master is calculated (S095) .

Next, parameters, such as welding conditions concerning the arc sensor of the slave are read, and validity and invalidity of the arc sensor of the slave is determined (S100). If the arc sensor of the slave is invalid in S100 (No at S100), the processing related to the arc sensors is finished, and jumping to the processing of S140 is made. If the arc sensor of the slave is valid (Yes at S100) in S100, control device 10b of the slave reads the data equivalent to the deviation from a welding line from the arc sensor of the slave. Moreover, the read data is sent to the master from the slave via communication cable X between robots, and the master calculates correction of the slave position. That is, the slave locus correction by the arc sensor of the slave is calculated (S105).

Moreover, it is determined whether or not the slave locus correction by the arc sensor of the slave is not reflected in the master, i.e., the arc sensor correction of the slave is also used in the master (S110). If the slave locus correction by the arc sensor of the slave is reflected in the master in S110, i.e., if the arc sensor correction of the slave is also not used in the master (No at S110), the processing related to the arc sensors is finished, and jumping to the processing of S140 is made. If the slave locus correction by the arc sensor of the slave is reflected in the master in S110, i.e., if the arc sensor correction of the slave is also used in the master (Yes at S110), correction of the position of the master is calculated using the above read data equivalent to the deviation of the welding position of the slave from the welding line, or using the correction of the slave position calculated in S105 (S115).

Since S140 to S250 are the same as those of Figs. 8A and 8B, description thereof is omitted. Thereafter, corrections (master locus corrections) of the master positions by the arc sensors of the master and the slave are respectively added to the instruction position of the master obtained in S220, and the instruction position of the master is updated (S255). Thereafter, corrections (slave locus corrections) of the slave positions by the arc sensors of the master and the slave are respectively added to the instruction position of the slave obtained in S250, and the instruction position of the slave is updated (S256). Since S260 to S290 are the same as those of Figs. 8A and 8B, description thereof is omitted.

As described above, in the present embodiment, the arc sensor function is performed in both of welding robot systems a and b, respectively. However, the arc sensor function may be performed in a plurality of welding robot systems, respectively. Alternatively, the arc sensor function may be performed in any one welding robot system of two welding robot systems a and b, thereby obtaining correction information to correct a welding position, and the other welding robot system may obtain correction information from one welding robot system, thereby correcting a welding position on the basis of this correction information.

Additionally, the arc sensor function may be performed in a plurality of welding robots or one of a plurality of welding robots, and each welding robot of one or the plurality of welding robots corrects the position of a single electrode with respect to a welding line using the correction information of the arc sensor function. In this case, the other welding robots which do not perform the arc sensor function may obtain correction information from the welding robot which performs the function of one or a plurality of arc sensors, and may correct the position of a single electrode with respect to a welding line on the basis of this correction information.

Additionally, although the above embodiments have been described where one of two robots is followed by the other robot, using two robots, it is natural that one robot can be followed by two or more robots, using three or more robots.

As described above, since the welding method and welding system of the present invention perform welding by making a master welding system followed by a slave welding robot system, a plurality of welding robot systems can perform welding in any combination, and the efficiency of the whole system can be enhanced.

### INDUSTRIAL APPLICABILITY

Since the welding method and welding system of the present invention can enhance the efficiency of the whole system, the welding method and the welding system are industrially useful as a welding method and a welding system which perform high-deposition welding using a plurality of welding robot systems.

### DESCRIPTION OF REFERENCE NUMERALS AND SIGNS

- 10a, 10b:: CONTROL DEVICE
- 11a, 11b:: MANIPULATOR
- 12a, 12b:: WELDING POWER-SUPPLY UNIT
- 121a, 121b:: TORCH TERMINAL
- 122a, 122b:: BASE-MATERIAL TERMINAL
- 124a, 124b:: CABLE
- 13a, 13b:: TOUCH SENSOR UNIT
- 14a, 14b:: WIRE FEEDER
- 141a, 141b:: ELECTRIC SUPPLY TERMINAL
- 15a, 15b:: TORCH CABLE
- 16a, 16b:: SINGLE ELECTRODE WELDING TORCH
- 17a, 17b:: ARC SENSOR
- 18a, 18b:: CONSUMABLE WELDING ELECTRODE
- a, b:: WELDING ROBOT SYSTEM
- W:: BASE MATERIAL
- L:: WELDING LINE
- X:: COMMUNICATION CABLE BETWEEN ROBOTS

## Claims

1. A welding method which performs welding using a plurality of welding robot systems which performs welding using a single electrode, the method comprising:
compelling a movement of the single electrode by one of the welding robot systems to be followed by a movement of the single electrodes by an other of the welding robot systems, and
performing welding by using the single electrode of the one of the welding robot system and the single electrodes of the other of the welding robot systems simultaneously in a same direction on a same welding line.

2. The welding method of Claim 1,
wherein an individual weaving operation is performed in every welding robot system.

3. The welding method of Claim 1,
wherein one of the welding robot systems performs welding while performing the weaving operation, and an other of the welding robot systems do not perform the weaving operation.

4. The welding method of Claim 1,
wherein an arc sensor function is performed in each of the welding robot systems, and each of the welding robot systems corrects a position of the single electrode on the welding line using correction information of the arc sensor function.

5. The welding method of Claim 1,
wherein an arc sensor function is performed in at least of the welding robot systems and
wherein an other of the welding robot systems which do not perform the arc sensor function obtain correction information from the welding robot system which performs the arc sensor function, and correct the position of the single electrode on the welding line on the basis of the correction information.

6. The welding method of Claim 1,
wherein welding is performed while forming one melting pool by an arc generated between the single electrode of the one of the welding robot systems, and a base material, and other arcs generated between the single electrodes of the other of the welding robot systems and the base material.

7. The welding method of Claim 1,
wherein the two welding robot systems are used.

8. A welding system comprising:
a plurality of welding robot systems each including
a manipulator holding a welding torch for a single electrode;
a control device which controls an operation of the manipulator on the basis of an operation program which is stored in advance; and
a welding power-supply unit which supplies electric power between a welding wire which is a single electrode, and a welding object,
wherein a movement of the single electrode by the manipulator of one of the welding robot systems is followed by a movement of the single electrodes by the manipulators of another of the welding robot systems, and
the single electrode of the one manipulator and the single electrodes of the other manipulators perform welding simultaneously in a same direction on a same welding line.

9. The welding system of Claim 8,
wherein welding is performed while forming one melting pool by an arc generated between the single electrode of the one of the welding robot systems, and a base material, and other arcs generated between the single electrodes of the other of the welding robot systems, and the base material.

10. The welding system of Claim 8,
wherein the two welding robot systems are used.

## Amended claims

### Amended claims under Art. 19.1 PCT

**1.** A welding method which performs welding using a plurality of welding robot systems which performs welding using a single electrode, the method comprising:
compelling a movement of the single electrode by one of the welding robot systems to be followed by a movement of the single electrodes by an other of the welding robot systems, and
performing welding by using the single electrode of the one of the welding robot systems and the single electrodes of the other of the welding robot systems simultaneously in a same direction on a same welding line, and
performing welding while forming one melting pool by an arc generated between the single electrode of the one of the welding robot systems and a base material, and other arcs generated between the single electrodes of the other of the welding robot systems and the base material.

**2.** The welding method of Claim 1,
wherein an individual weaving operation is performed in every welding robot system.

**3.** The welding method of Claim 1,
wherein one of the welding robot systems performs welding while performing the weaving operation, and an other of the welding robot systems do not perform the weaving operation.

**4.** The welding method of Claim 1,
wherein an arc sensor function is performed in each of the welding robot systems, and each of the welding robot systems corrects a position of the single electrode on the welding line using correction information of the arc sensor function.

**5.** The welding method of Claim 1,
wherein an arc sensor function is performed in at least one of the welding robot systems and
wherein an other of the welding robot systems which do not perform the arc sensor function obtain correction information from the welding robot system which performs the arc sensor function, and correct the position of the single electrode on the welding line on the basis of the correction information.

**6.** (Cancelled)

**7.** The welding method of Claim 1,
wherein the two welding robot systems are used.

**8.** A welding system comprising:
a plurality of welding robot systems each including
a manipulator holding a welding torch for a single electrode;
a control device which controls an operation of the manipulator on the basis of an operation program which is stored in advance; and
a welding power-supply unit which supplies electric power between a welding wire which is a single electrode, and a welding object,
wherein a movement of the single electrode by the manipulator of one of the welding robot systems is followed by the movement of the single electrodes by the manipulators of an other of the welding robot systems, and the single electrode of the one manipulator and the single electrodes of the other manipulators perform welding simultaneously in a same direction on a same welding line, and
welding is performed while forming one melting pool by an arc generated between the single electrode of the one of the welding robot systems, and a base material, and other arcs generated between the single electrodes of the other of the welding robot systems, and the base material.

**9.** (Cancelled)

**10.** The welding system of Claim 8,
wherein the two welding robot systems are used.
